# EUROPEAN PATENT APPLICATION

(11) **EP 2 385 597 A1**
(43) Date of publication of application: **09.11.2011**
(21) Application number: 11164709.5
(22) Date of filing: 04.05.2011
(51) Int. Cl.: H02G 3/08, H02G 3/14

(54) **Junction box**

(30) Priority: 07.05.2010 IT BG20100024
(71) Applicant: ABB S.p.A., 20124 Milano (IT)
(72) Inventor: Pezzato, Maurizio, 36067, San Giuseppe di Cassola (VI) (IT); Fontana, Rodolfo, 21050, Bisuschio (VA) (IT); Toniolo, Simone, 36100, Vicenza (VI) (IT)
(74) Representative: De Santis, Giovanni

(57) **Abstract**

Junction box (1) for housing one or more electric and/or electronic devices or components, comprising:
- a first half-shell (2) having a first base wall (4) wherefrom extend transversally first side walls (5);
- a second half-shell (3) comprising a second base wall (6) wherefrom extend transversally second lateral walls (7) suitable for coupling with first side walls (5);

The junction box (1) comprises first and second reciprocal coupling means defined on the first half-shell (2) and the second half-shell (3), respectively, and configured so as to couple snap-wise the first half-shell (2) and the second half-shell (3) to each other.

## Description

The present invention relates to a junction box destined to house one or more electrical and/or electronic devices or components, having improved characteristics and efficiency.

Junction boxes, referred below for simplicity as "boxes", are commonly used in electrical circuits present, for instance, inside or outside homes, offices, industrial plants, etc. Said boxes are suitable for housing electrical and/or electronic devices or components, isolating and protecting them from the external environment. For instance, the boxes may house terminals suitable for connecting the cables leading the electric power from one or more devices in the electric circuit to the box, such as for instance circuit breakers, with cables leading electrical power from the box to several utilities, such as for example outlets. The types of electronic devices that can be housed in a box are for instance electronic boards of various types and functionality.

The boxes comprise in general a base, where the electric and/or electronic devices are placed, and a closing cover.

The boxes must guarantee a certain nominal protection rate (typically indicated as the IP protection rate), which depends on the type of environment where the boxes are designated to be installed. In general, external objects, dust, liquids, and humidity must be prevented from penetrating inside the box.

Although the boxes currently fulfill the functions and applications they were designed for, they still present some aspects that could be improved, in particular with respect to the convenience and functionality of the coupling between the base and the cover, and the ability to guarantee the nominal protection rate.

Well-known boxes have the base and the cover coupled by means of one or more metal or plastic screws. This type of coupling is not very practical or functional since an operator must first remove all the screws to have access to the content of the box; and then place the screws back on in order to re-establish the base-cover coupling.

The protection rate of the box also depends, inter alia, on the fact that the coupling between the base and cover must prevent contaminating elements present in the external environment from entering the box. The screwing operation is therefore particularly critical, since a partial or a bad executed screwing can leave a gap between the base and cover through which the contaminating elements could penetrate inside the box, causing an eventual damage or a life time reduction of the devices housed therein, and the subsequent malfunction of the electrical circuit where the box itself is installed.

The main object of the present invention is to implement a box for housing electric and/or electronic devices so as to overcome the aforementioned disadvantages, and in particular a box which, with respect to the known solutions, can provide a coupling between its base and cover that is particularly practical, functional, quick, and suitable for reducing the possibility of operator error.

This task is achieved by a junction box suitable for housing one or more electric and/or electronic devices or components, characterized in that it comprises:
- a first half-shell having a first base wall wherefrom first side walls extend transversally;
- a second half-shell comprising a second base wall wherefrom second side walls extend transversally, suitable for coupling to the first side walls;
- first and second reciprocal coupling means defined on the first half-shell and on the second half-shell, respectively, and configured so as to couple snap-wise the first half-shell and the second half-shell to each other.

Additional characteristics and advantages of the invention will be better illustrated by the descriptions of the preferred embodiments, but not limited to, of the box according to the present invention, illustrated only by way of non-limiting examples in the enclosed drawings, wherein:
- figures 1-4 are perspective views of some embodiments of the box according to the present invention;
- figure 5 is a perspective view of a cover which can be used in boxes according to the invention;
- figures 6 and 7 are perspective views illustrating two possible embodiments of a base used in the boxes according to the invention;
- figures 8-11 are plan views of the base of the boxes in Figures 1-4, respectively;
- figure 12 is a perspective view of an additional embodiment of a cover which can be used in the boxes according to the invention;
- figure 13 is a magnified view showing in detail a portion of the side walls of a base which can be used in the boxes according to the invention.

For simplicity during the course of the description the same numbers will be used to refer to the same or equivalent elements in different embodiments of the box according to the present invention.

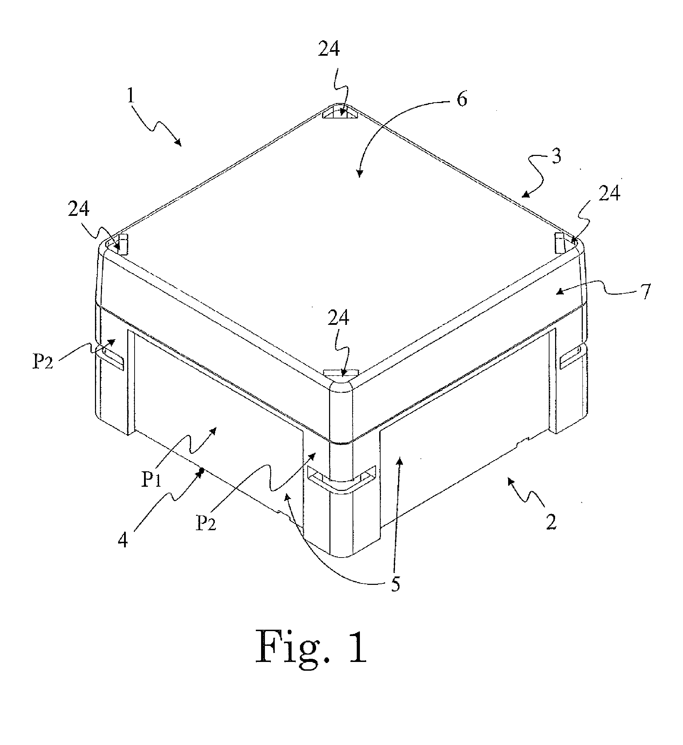

In figures 1-4, four embodiments of box 1 are illustrated. In all of these embodiments, box 1 has a substantially parallelepiped shape; however the implementation of the invention may be extended also to different shape boxes, for example, but not limited to, cylindrical or conical boxes.

The box 1 is defined by coupling a first half-shell 2 with a second half-shell 3.

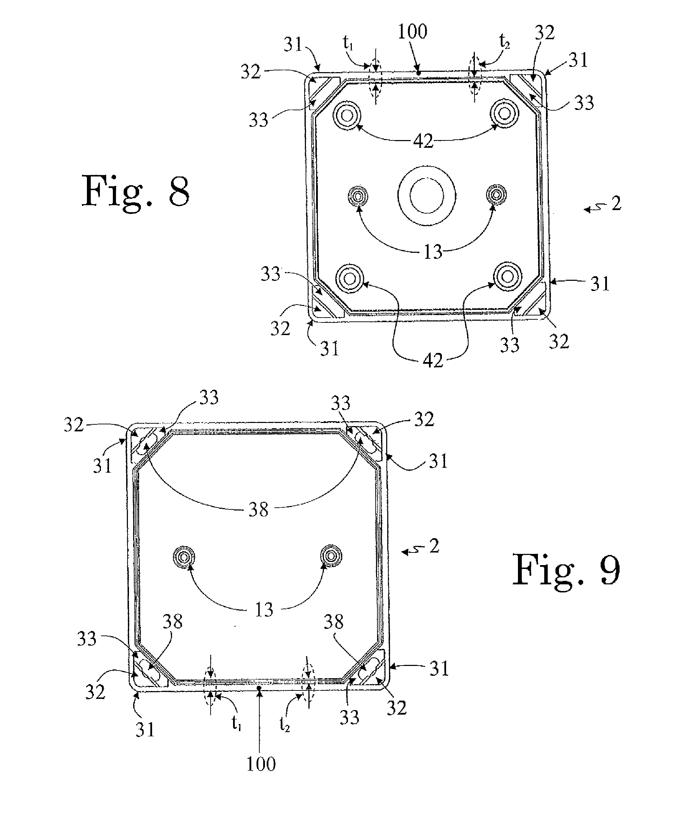

First half-shell 2, or base 2, comprises a first base wall 4 (indicated hereinafter as wall 4) wherefrom first side walls 5 extend transversally (indicated hereinafter as lateral walls 5), and it is suitable to house one or more electric and/or electronic devices or components. For example, figures 8 and 9 depict two support elements 13 for fixing thereon DIN guides or plates on which the electric and/or electronic devices are placed.

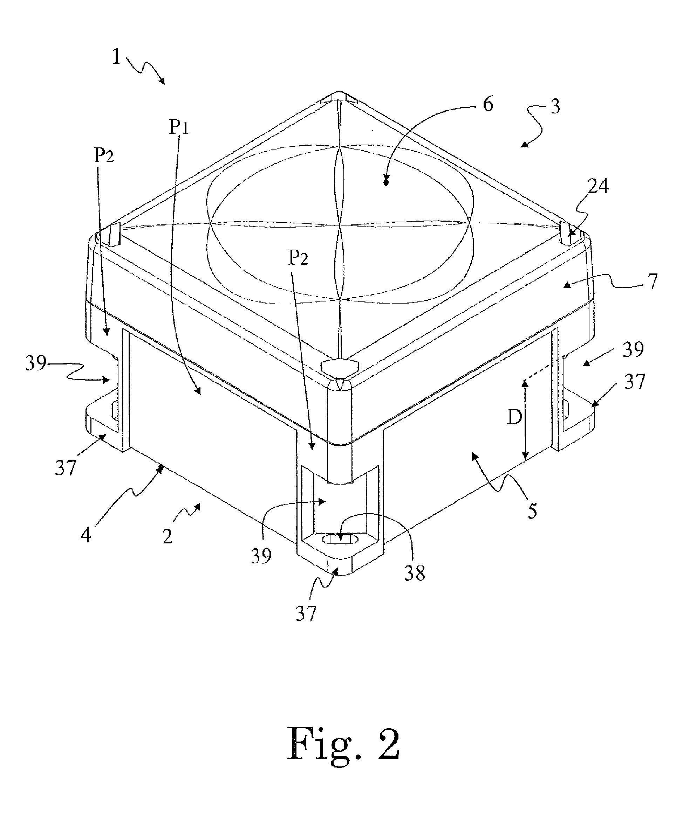

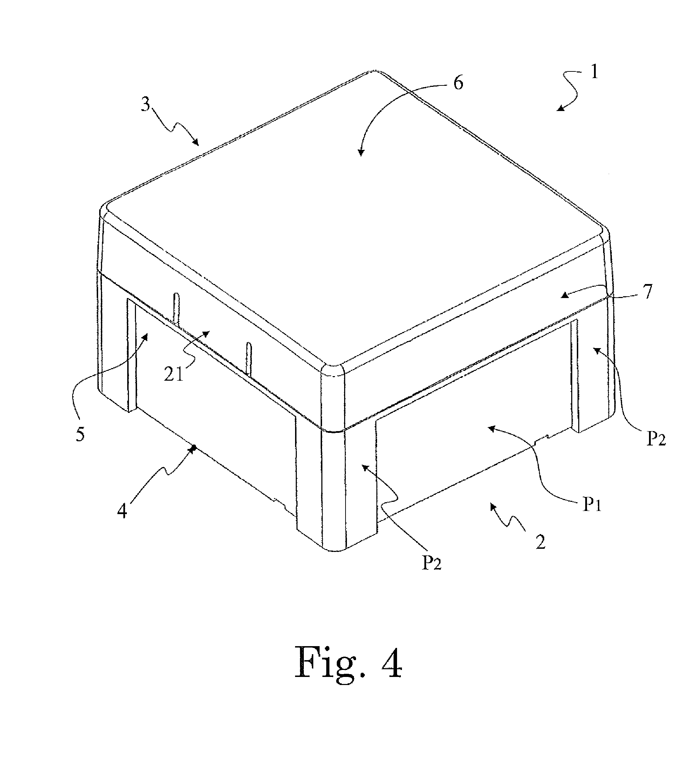

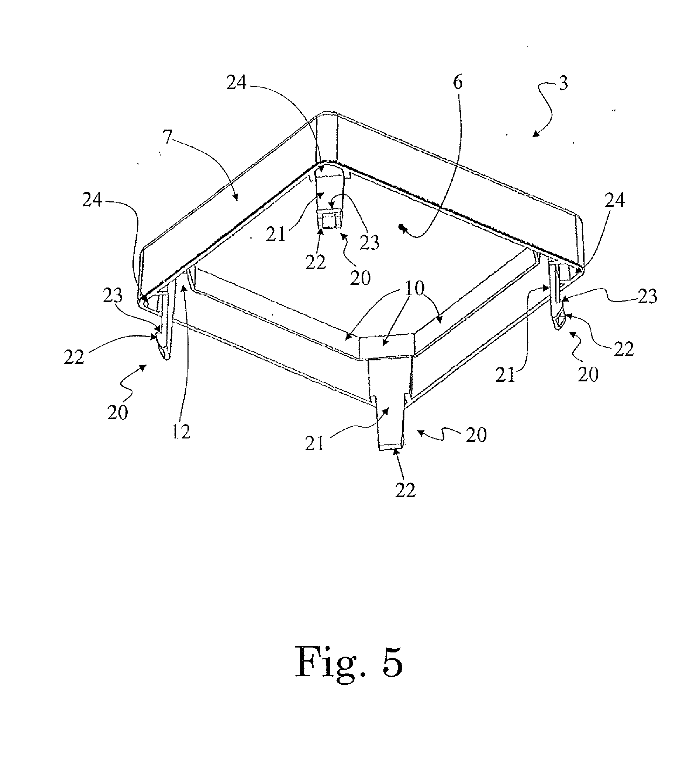

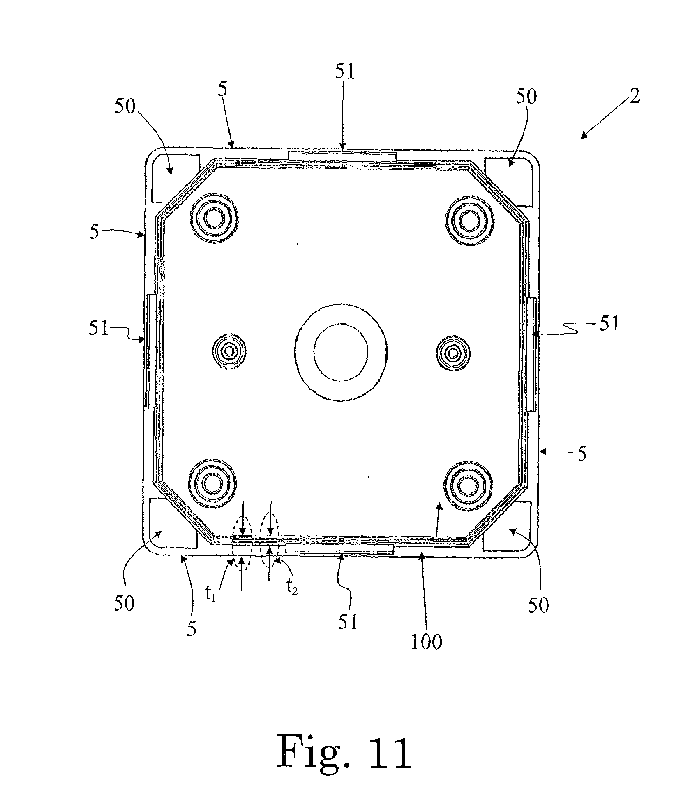

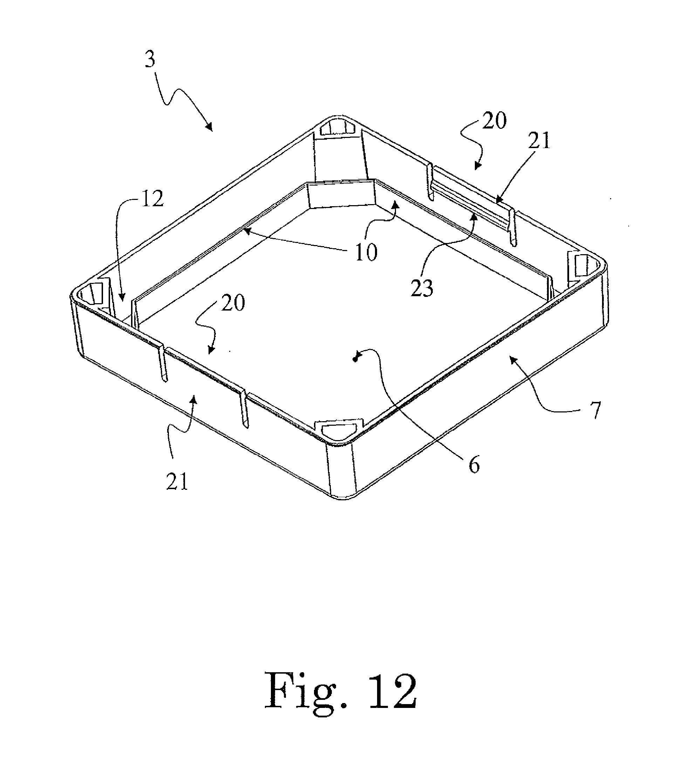

The second half-shell 3, or cover 3, comprises a second base wall 6 (indicated hereinafter as wall 6) wherefrom said second side walls 7 extend (indicated hereinafter as side walls 7), which are suitable for coupling with side walls 5 to define box 1. For example, cover 3 in figure 5 may be coupled with base 2 in figures 8 and 9 to define boxes 1 in figures 1 and 2, respectively, and cover 3 in figure 12 may be coupled with base 2 in figure 11 to define box 1 in figure 4.

According to a preferred embodiment, at least one of side walls 5 of base 2 comprises a first portion 8 which extends transversally from wall 4 and which presents an end 100, opposite the wall 4, with a minimum thickness t₁ ("minimum thickness t₁" is to be understood as the minimum distance between the two surfaces of end 100 facing the interior and exterior of base 2, respectively).

A second portion 9 of such a side wall 5 extends transversally from the end 100 of the first portion 8 and has a maximum thickness t₂ ("maximum thickness t₂" is to be understood as the maximum distance between the two surfaces of second portion 9 opposite each other and facing towards the interior and exterior of base 2, respectively), which is smaller than t₁. In the illustrated embodiments, second portions 9 have a uniform thickness t₂.

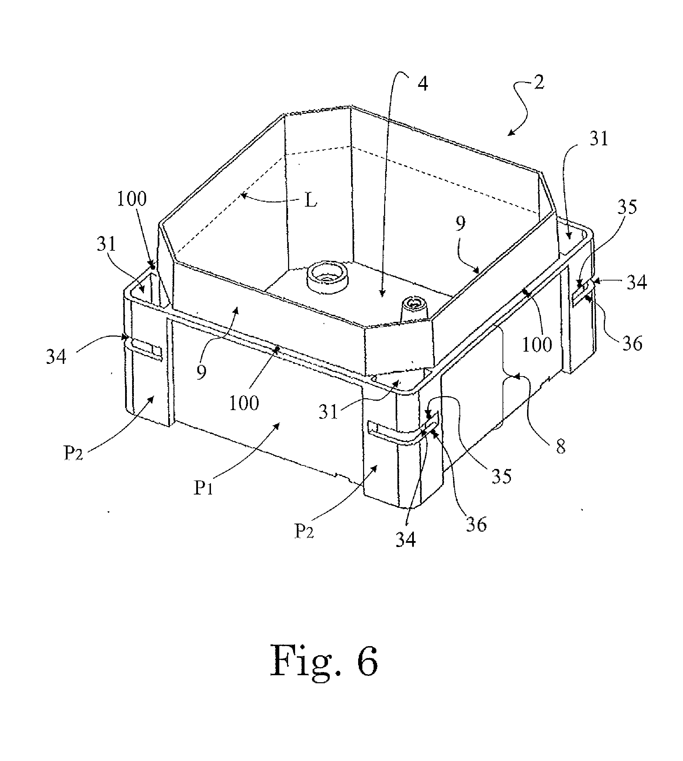

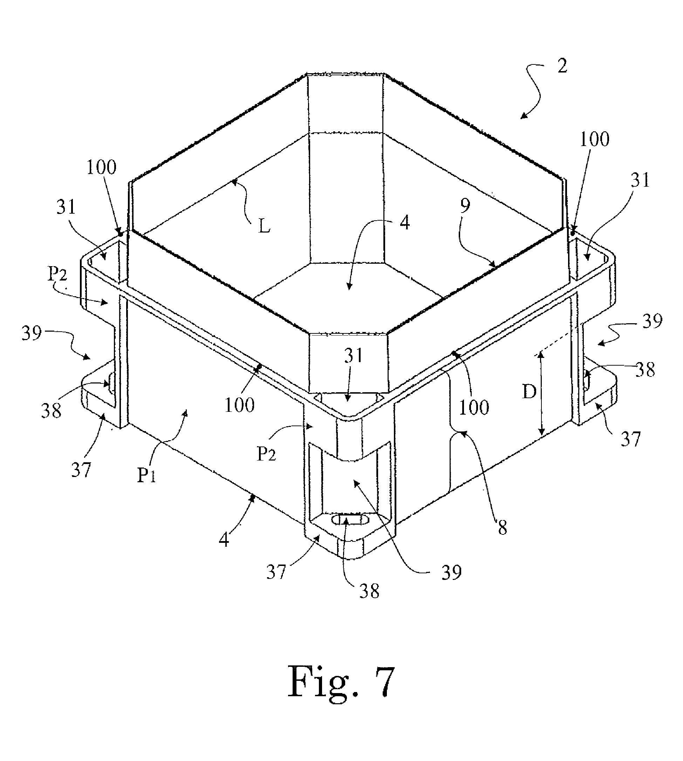

Preferably, all side walls 5 of base 2 comprise the first portion 8 and the second portion 9, as in the illustrated examples. With particular reference to figures 8-11, first portion 8 has a substantial rectangular plan, while the second portion 9 has substantially octagonal plan; the internal surfaces of the two portions 8, 9, facing the interior of box 1, are in contact with each other along the "L" coupling line (see figures 6 and 7). Alternatively, the first and second portions 8, 9 may have different plan shape, and their internal surfaces may be aligned or staggered.

First portions 8 may have uniform or non uniform thickness along their transversal extension with respect to wall 4.

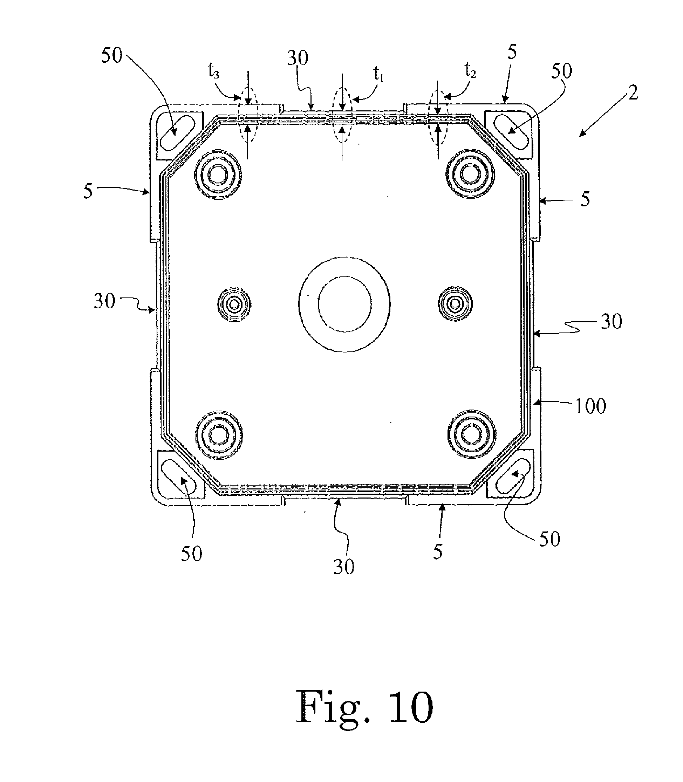

For example, in the base 2 illustrated in figures 8, 9 and 11, the ends 100 of the first portions 8, wherefrom the second portions 9 extend, have uniform thickness t₁. In the base 2 illustrated in figure 10, the central portion of end 100 of the first portions 8 has a minimum thickness t₁, while its side walls, opposite one another with respect to the central portion, have a thickness t₃ greater than t₁.

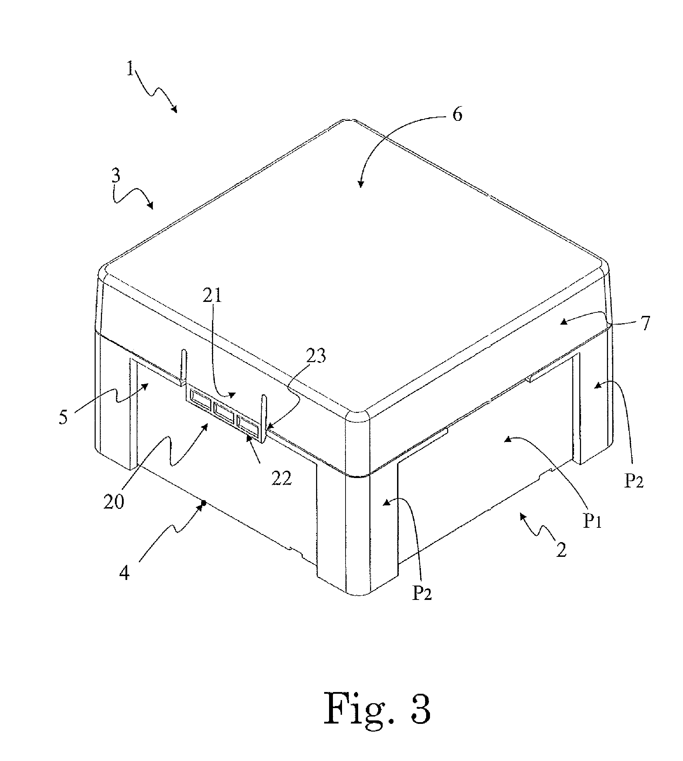

Figures 1, 2, 4, 6 and 7 show how between the ends 100 of each first portion 8 and the wall 4 a central transversal portion P₁ is comprised, with thickness smaller than t₁, and two transversal side portions P₂ are comprised, opposite each other with respect to the central portion P₁ and having thickness equal to t₁. In figure 3, the central portion P₁ has a thickness smaller than t₁ and the two transversal side portions P₂ have a thickness equal to t₃. In the central transversal portions P₁ of bases 2 there may conveniently be defined openings for passing cables connecting one or more elements inside box 1 with the electrical circuit where box 1 itself is installed.

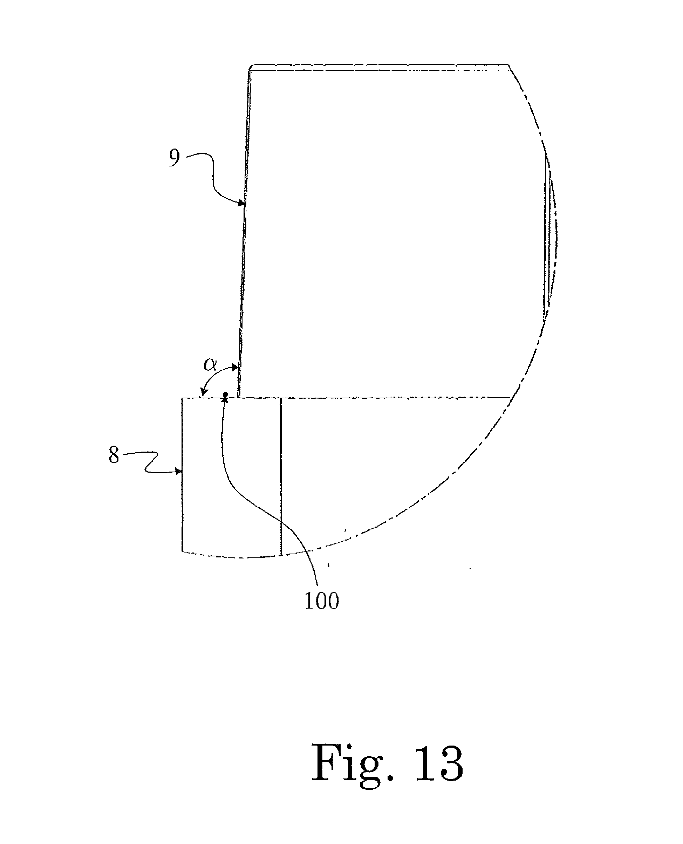

Preferably, the second portion 9 extends from end 100 of the first portion 8 diverging therefrom. The term "extends diverging therefrom" means that between the second portion 9 and the end 100 of first portion 8 wherefrom it extends there is comprised an angle with value greater than 90°. In particular, as shown in figure 13 the second portion 9 diverges from the end 100 of first portion 8 towards the interior of box 1, so as to form with said end 100 an angle α with value preferably greater than 90° and smaller than 95°, and more preferably equal to about 92°.

On cover 3 there is defined a seat 12 suitable to couple, preferably by fitting, with the second portions 9 of side walls 5. Seat 12 may be defined by walls extending transversally from the wall 6 facing each other, or alternatively may be defined in the thickness of wall 6 itself. In the embodiments of the cover 3 illustrated in figures 5 and 12, third side walls 10 extend transversally from wall 6 at a distance from the side walls 7 so as to define seat 12. Alternatively, side walls 7 of cover 3 may comprise a first portion and a second portion equivalent to the first portion 8 and the second portion 9, respectively, described for the base 2; correspondingly, the seat suitable for coupling with the first portions of side walls 7 may be defined on base 2.

When the cover 3 is coupled with the base 2, the second portions 9 of side walls 5 couple with (preferably they fit in) seat 12 defined on cover 3, realizing a labyrinth suitable for preventing the passage of contaminating elements (objects, dust, liquids, humidity) inside box 1, through the gap that may remain between the base 2 and the cover 3 after their coupling.

A box according to the present invention comprises first coupling means and second coupling means defined on the base 2 and the cover 3, respectively, and configured in such a way so as to couple snap-wise the base and cover to each other.

In a first preferred embodiment of box 1, the second coupling means comprise at least one tooth 20 having a body 21 which extends from cover 3. Preferably the tooth 20 extends from cover 3 transversally with respect to wall 6; for example, the tooth 20 may extend from wall 6 or from the end of a side wall 7, opposite wall 6 itself. Preferably, the body 21 is made as one piece with cover 3 and has a structure which makes it flexible.

A hooking plane 23 of tooth 20 extends transversally from body 21; preferably, at the end of body 21 opposite to wall 6 there is defined a head 22 comprising such a hooking plane 23. Alternatively, the hooking plane 23 may extend from the central portion of body 21.

The first coupling means comprise at least a coupling plane defined on base 2 and suitable for coupling with the hooking plane 23 of a corresponding tooth 20. The coupling plane may extend inside of an opening 31 which is defined in the base 2 so as to receive a tooth 20. Alternatively, the coupling plane may be defined by a fin or edge extending transversally from one of side walls 5 of base 2.

In the embodiments illustrated in figures 1 and 2, the second coupling means of cover 3 comprise a first, a second, a third, and a fourth tooth 20 having a body 21 and a head 22 on which there is defined the coupling plane 23. Such teeth 20 extend from the first, second, third and fourth corner of wall 6, respectively; in particular, as illustrated in figure 5, teeth 20 are arranged inside seat 12, so as to face towards the third walls 10, which are placed at the corners of cover 3.

On cover 3 there are defined through holes 24, each one of them is suitable for making one of teeth 20 accessible from outside the box 1. Through holes 24 have an inlet defined on the surface of wall 6 facing towards the exterior of box 1 and extend transverse with respect to wall 6, from their inlet up to the ends of side walls 7. In particular, one of the side walls that defines each through hole 24 is constituted by a portion of a tooth 20. When base 2 and cover 3 are coupled to each other, caps may be placed inside though holes 24, so as to isolate them from the external environment, better guaranteeing the nominal protection rate of box 1.

As illustrated for example in figures 6-9, base 2 may comprise a first, second, third, and fourth opening 31 defined in the first portions 8 of side walls 5, at the first, second, third, and fourth corner of base 2.

Each of the four openings 31 extends transverse with respect to wall 4, from an inlet defined on end 100 of first portions 8 towards wall 4 itself. In particular, the inlet of the openings 31 is defined between the surfaces of the first portion 8 and the surface of the second portion 9 facing towards the outside of base 2. From such inlet each one of the openings 31 extends along the corner structure defined by two adjacent side walls 5.

Inside each opening 31, there is positioned a tab 32, preferably arranged to be parallel with respect to wall 4. The tab 32 connects two cross walls that define opening 31 (see figures 8 and 9) and it is spaced from the remaining cross walls so as to leave a slot 33 suitable for being crossed by at least the head 22 of tooth 20. The surface of tab 32, opposite wall 4, constitutes the coupling plane for the hooking plane 23 of tooth 20.

In a first embodiment, such as for example that shown in figure 6, openings 31 extend from their inlets up to at least wall 4. In this case, at least one window 34 may be defined in base 2, so as to link the outside of box 1 with the inside of openings 31. In the base 2 of figure 6 it is shown that four windows 34 are defined in the first portions 8 of side walls 5, each at one of the four corners of base 2. The first edge 35 and the second edge 36 of windows 34, opposite to each other and parallel to wall 4, are spaced from wall 4 so that an operator may see through windows 34, the coupling between hooking planes 23 of teeth 20 and tabs 32. In particular, the first edge 35 is defined at a distance from wall 4 so that it is aligned with the coupling plane of tab 32.

In a second embodiment, such as for instance that shown in figure 7, openings 31 extend from their inlet up to a distance "D" from wall 4; in particular, the coupling plane of tabs 32 may be positioned in openings 31 at distance "D" from wall 4.

In this case, the base 2 comprises four fastening fins 37 defined at the four corners of wall 4; a through hole 38 extends through each fastening fin 37 and is suitable for receiving a screw to fasten box 1 to a support plane, such as for instance the wall of a building.

In box 1 shown in figure 1, screws for fastening to the support plane are inserted in apposite holes 42 defined on wall 4 inside box 1 (see figure 8).

There is a second opening 39 in the angle structure defined by the two adjacent side walls 5. Such a second opening 39 extends transversally with respect to wall 4, from first opening 31 to the fastening fin 37. The size of second opening 39 are such to allow an operator to easy apply or remove the screws, for fastening or removing box 1 from the support plane.

Box 1 may comprise at least one covering accessory suitable for covering a second opening 39, such as to prevent access of said opening 39 from outside box 1. For example, four doors (not shown in figures) may be each operatively connected to a corner of the base 2, so as to be able to be moved from a first position, where they cover a corresponding second opening 39, to a second position, where said second opening 39 is accessible from outside box 1.

During the coupling phase of cover 3 to base 2, the body 21 of teeth 20 is inserted into the corresponding opening 31, until head 22 has passed through the slot 33. At this time, the hooking plane 23 of tooth 20 is coupled to the coupling plane constituted by tab 32; an operator can verify the correct coupling by observing tooth 20 through window 34, in the base 2 of figure 6, or trough the second opening 39, in base 2 of figure 7. For this purpose tooth 20 may comprise signaling means suitable for facilitating verification by the operator; for example, at least a portion of tooth 20 may be colored differently than cover 3 and base 2.

In the decoupling phase of cover 3 from base 2, the operator acts (for instance by using a screwdriver) on central body 21 of teeth 20 through the through holes 24 defined on cover 3. Central body 21 is moved so as to decouple the head of tooth 22 from the coupling plane of tab 32.

It should be understood that the number, shape, and position of the teeth on cover 3 (and then the number and position of the coupling planes for the teeth on base 2) may be different from those described herein, without thus limiting the application of the present invention. For example, there may be provided four teeth placed at the center of the sides of the cover base wall, or instead for bigger boxes, there may be provided six teeth at the perimeter of the cover (four placed at the corners and two at the opposite sides of the central portion of the cover). Still for example, reference is now made to the base 2 depicted in figure 10. On each of four side walls 5 of base 2 there are defined the coupling planes 30 for teeth 20. In particular, such coupling planes 30 are defined on the side of the first portions 8 having thickness t₁. A first tooth 20 and the second tooth 20 (one of which is shown in figure 3), are made as a single piece with two side walls 7 opposite one another; coupling planes 23 of the heads 22 of teeth are suitable for coupling with two coupling planes 30 opposite to one another.

Alternatively, in the base 2 illustrated in figure 11, four fins 51 extend transversally from the second portions 9 of the four side walls 5, thus defining four coupling planes. Cover 3 in figure 12 comprises two teeth 20 having hooking planes 23 that extend from the central portion of body 21 and are suitable for coupling with two fins 51 opposite one another.

In the examples illustrated in figures 3 and 4, the body 21 of teeth 20 is accessible directly from outside boxes 1 and therefore it is no longer necessary to define through holes on cover 3 in order to access teeth 20 from outside box 1.

Furthermore, since teeth to be inserted into the corners of base 2 are not provided, four through holes 50 may be defined on base 2 at its angles (see figures 10 and 11). If cover 3 is removed from base 2, a screw is inserted in through hole 50 and, exiting from base 2, it fastens box 1 to a support plane.

In a further embodiment not shown in figures, the second coupling means comprise at least one centering pin suitable for facilitating and guiding the teeth coupling in cover 3 with base 2. For example, from the central portion of a first side of cover 3, a centering pin can protrude transversally, suitable for coupling snap-wise to a coupling portion defined on base 2, for example into an opening. At the end of a second side of cover 3, opposite to the first side, two teeth of the type described can be placed. Alternatively, two centering pins may protrude transversally from opposite ends of the first side of cover 3.

The centering pins are first inserted into the corresponding openings on base 2 and then cover 3 is moved towards base 2, so as to guide the two teeth towards the corresponding coupling planes.

The application of the present invention also extends to the case where the described teeth and/or the seat and/or the centering pins are defined on base 2, and correspondingly the coupling planes and/or the second side wall portions and/or the openings for the centering pins are defined on the cover. Furthermore, some teeth and/or centering pins may be defined on the cover, and the rest on the base.

In another embodiment, not shown in figures, the box may comprise at least a mobile hooking element, or insert, suitable for sliding within a channel defined in the cover. The insert may take a hooking position, wherein at least one first portion of said mobile hooking element protrudes from the channel, and a second released position, wherein at least a second portion of said mobile hooking element is contained in the channel. In the hooking position, the insert is coupled to a coupling portion defined in the base, while in the released position the insert is decoupled from the coupling portion.

Also in this case, it is not a limitation that the inserts and their channels may be defined on base 2, while the coupling planes are defined on cover 3.

It has been found that box 1 according to the present invention fully achieve the established objectives while providing a series of advantages over the prior art. Indeed, the use of snap-wise coupling means enables an easy and quick base-cover coupling operation with respect to the use of screw coupling means. This also reduces the possibility of having an incorrect coupling between base and cover; however suitable means (such as the described windows 34) for verifying the proper coupling are provided, and means suitable for preventing the passage of contaminating elements inside box 1 through the gap left between base and cover (such as the labyrinth formed by coupling of second portions 9 with seat 12).

In particular, the diverging arrangement of the second portions 9 with respect to the first portions 8 of side walls 5 improves the coupling between second portions 9 and the seat 12 defined in cover 3, therefore improving the overall coupling between base 2 and cover 3.

The box thus devised can undergo a number of modifications and variations, all included within he scope of the present invention. For example, it is possible to implement any combinations among the different elements which comprise the examples illustrated in the enclosed figures. Furthermore, all the details may be substituted by other technically equivalent elements. In practice, the type of materials within the scope of the applications described above, as well as the dimensions, may be duly adjusted according to the requirements and the state of the art.

## Claims

1. Junction box (1) suitable for housing one or more electrical and/or electronic devices or components, **characterized in that** it comprises:
- a first half shell (2) having a first base wall (4) wherefrom first side walls (5) extend transversally;
- a second half shell (3) comprising a second base wall (6) wherefrom second side walls (7) extend tranversally, suitable for coupling to said first side walls (5);
- first and second reciprocal coupling means defined on said first half shell (2) and on said second half shell (3), respectively, and configured so as to couple snap-wise said first half shell (2) and said second half shell (3) to each other.

2. The junction box (1) according to claim 1, **characterized in that** at least one of said first side walls (5) comprises:
- a first portion (8) that extends transversally from said first base wall (4) and having an end (100), opposite said first base wall (4), which has a first thickness (t₁);
- a second portion (9) that extends transversally from said end (100) and has a second thickness (t₂) smaller than said first thickness (t₁).

3. The junction box (1) according to claim 2, **characterized in that** said second portion (9) extends from said end (100) of the first portion (8) diverging therefrom.

4. The junction box (1) according to claim 3, **characterized in that** between said second portion (9) and said end (100) of the first portion (8) there is comprised an angle (α) having a value greater than 90° and smaller than 95°.

5. The junction box (1) according to one or more of the previous claims, **characterized in that** said first portion (8) has a substantially rectangular plan and said second portion (9) has a substantially octagonal plan.

6. The junction box (1) according to one or more of the previous claims, **characterized in that** a seat (12) is defined on said second half shell (3) and is suitable for coupling with said second portion (9) of the first side walls (5).

7. The junction box (1) according to claim 6, **characterized in that** third side walls (10) extend transversally from said second base wall (6) at a distance from said second side walls (7) such as to define said seat (12).

8. The junction box (1) according to one or more of the previous claims, **characterized in that**:
- said second coupling means comprise at least one tooth (20) having a body (21) that extends from said second half shell (3) and a hooking plane (23) that extends transversally from said body (21);
- said first coupling means comprise at least one coupling plane (30, 32, 51) suitable for coupling with said hooking plane (23).

9. The junction box (1) according to claim 8, **characterized in that** at least one opening (31) is defined in said first half shell (2) and is suitable for receiving said tooth (20), said coupling plane (32) being defined in said at least one opening (31).

10. The junction box (1) according to claim 9, **characterized in that** it has a substantially parallelepiped shape, wherein said at least one tooth (20) comprises a first, a second, a third and a fourth tooth that extend transversally from the first, second, third and fourth corner of said second half shell (3), respectively, and wherein said at least one opening (31) comprises a first, a second, a third and a fourth opening defined in said first side walls (5) at the first, second, third and fourth corner of said first half shell (2), respectively.

11. The junction box (1) according to one or more of the previous claims, **characterized in that** at least one through hole (24) is defined in said second half shell (3) suitable for making said at least one tooth (20) accessible from outside the box (1).

12. The junction box (1) according to claim 1, **characterized in that** it comprises at least one movable hooking element suitable for sliding within a channel defined in said second half shell (3), said movable hooking element being configured so as to take:
- a hooking position, wherein at least a first portion thereof protrudes from said channel;
- a release position, wherein at least a second portion thereof is contained in said channel;
in said hooking position the movable element being coupled to a corresponding coupling portion defined in said first half shell (2), and in said release position the movable element being released from said coupling portion.
